# EUROPÄISCHE PATENTSCHRIFT

(11) **EP 4 038 216 B1**
(45) Veröffentlichungstag und Bekanntmachung des Hinweises auf die Patenterteilung: **12.07.2023**
(21) Anmeldenummer: 20780137.4
(22) Anmeldetag: 22.09.2020
(51) Int. Cl.: C23C 2/26, C23C 2/06, C23C 2/40, B21B 1/22, C21D 8/02, B21B 27/00, B32B 15/01, C22C 18/00, C22C 18/04, C21D 7/04, C21D 9/48

(54) **STAHLBLECH MIT EINER DETERMINISTISCHEN OBERFLÄCHENSTRUKTUR**
SHEET STEEL HAVING A DETERMINISTIC SURFACE STRUCTURE
TÔLE D'ACIER POURVUE D'UNE STRUCTURE SUPERFICIELLE DÉTERMINISTE

(30) Priorität: 30.09.2019 DE 102019215051
(43) Veröffentlichungstag der Anmeldung: 10.08.2022
(73) Patentinhaber: ThyssenKrupp Steel Europe AG, 47166 Duisburg (DE)
(72) Erfinder: JUNGE, Fabian, 40239 Düsseldorf (DE); CETINKAYA, Burak William, 44139 Dortmund (DE); MÜLLER, Gregor, 47441 Moers (DE)
(74) Vertreter: ThyssenKrupp Steel Europe AG
(86) Internationale Anmeldenummer: PCT/EP2020/076422
(87) Internationale Veröffentlichungsnummer: WO 2021/063751

(56) Entgegenhaltungen:
- EP-A1- 2 119 804
- WO-A1-2014/032779
- WO-A1-2014/037545

## Beschreibung

Die Erfindung betrifft ein mit einem zinkbasierten Überzug beschichtetes und mit einer deterministischen Oberflächenstruktur dressiertes Stahlblech. Des Weiteren betrifft die Erfindung ein Verfahren zum Herstellen eines mit einem zinkbasierten Überzug beschichteten und mit einer deterministischen Oberflächenstruktur dressierten Stahlblechs.

Im Automobilbau werden schon seit Jahrzehnten Blechwerkstoffe, insbesondere aus Stahl verwendet. Die Blechwerkstoffe werden insbesondere als Flachprodukte bereitgestellt und beispielsweise mittels Blechumformverfahren, wie zum Beispiel dem Tiefziehen, weiterverarbeitet. Die hierbei in den Blechwerkstoff eingebrachten Kräfte werden über die Blechoberfläche in das Tiefziehteil übertragen. Die lokalen Beanspruchungen der Blechoberfläche ergeben sich somit u. a. aus der Bauteilgeometrie und den im Prozess auftretenden Reibkräften. Diese lokalen Beanspruchungen eines betrachteten Oberflächenelementes, die sich aus Normal- und Scherkräften zusammensetzen, können während des Umformprozesses erheblichen Veränderungen unterliegen. Für ein optimales Umformergebnis ist es erforderlich, den Stofffluss während des Umformprozesses gezielt steuern zu können. Neben einer Anpassung des Blechzuschnitts kann dies zum Beispiel durch eine (Zusatz-)Beölung erfolgen, um lokale Verminderungen der Reibkräfte und somit der Rückhaltekräfte zu erreichen. Eine Erhöhung der Rückhaltekräfte kann beispielsweise durch den Einsatz von Ziehsicken realisiert werden.

Der Einsatz einer (Zusatz-)Beölung stellt einen erheblichen zusätzlichen Aufwand dar. Zum einen muss die (Zusatz-)Beölung aufwendig aufgebracht werden und zum anderen erhöht sich der Reinigungsaufwand sowohl beim Bauteil als auch im Umformprozess, da die eingebrachten Ölmengen die Prozessstabilität durchaus negativ beeinflussen können. Insbesondere vor dem Hintergrund einer umweltverträglichen Fertigung ist der erhöhte Einsatz von Schmierstoffen kritisch zu betrachten.

Die Benetzbarkeit des Blechwerkstoffes durch sowohl wässrige Medien als auch für umformprozessrelevante Schmiermittel ist nicht nur abhängig von der Blechtopografie. Die lokale Benetzbarkeit wird zusätzlich durch die vorliegende Oberflächenchemie beeinflusst. Der Blechwerkstoff kann unbeschichtet oder mit einem metallischen Überzug, welcher primär aus Korrosionsschutzgründen aufgebracht wird, beschichtet sein, wobei zwischen unbeschichteten und beschichteten, insbesondere verzinkten Blechwerkstoffen zu unterscheiden ist. Weiterhin sind die verzinkten Blechwerkstoffe in elektrolytisch- und feuerverzinkte Blechwerkstoffe zu unterteilen.

Texturierte Dressierwalzen übertragen ihre Textur während eines Dressiervorganges auf die Oberfläche der zu verarbeitenden Blechwerkstoffe als Negativ, d.h. Erhebungen auf der Walzenoberfläche resultieren in Täler in der Blechoberfläche und umgekehrt. Die auf diese Weise in die Blechoberfläche eingebrachten Vertiefungen, sogenannte geschlossene Leervolumina, dienen als Schmierstofftaschen, die einen auf die Blechoberfläche aufgetragenen Schmierstoff halten und während des Umformprozesses mit sich führen können. Aus dem Stand der Technik sind mit einer stochastischen Oberflächenstruktur dressierte Stahlblech beispielhaft aus der Patentschrift EP 2 006 037 B1 und mit einer deterministischen Oberflächenstruktur dressierte Stahlbleche beispielhaft aus der Patentschrift EP 2 892 663 B1 bekannt.

Elektrolytisch verzinkte Blechwerkstoffe werden vor dem Verzinken dressiert, wohingegen feuerverzinkte Blechwerkstoffe nach dem Verzinken dressiert werden.

Durch den im Zuge des Dressierens auftretenden Kontakt der formgebenden Elemente der Dressierwalze mit der Blechoberfläche kann die Oberflächenchemie der Kontaktfläche verändert werden. Hinsichtlich der Chemie sind feuerverzinkte Überzüge derart aufgebaut, dass sich auf dem primär im Überzug befindlichen Zink eine Schicht aus sauerstoffaffineren Legierungselementen bildet. Die mechanische Beanspruchung beim Dressieren kann dafür sorgen, dass an den Kontaktstellen von Dressierwalze und Blechwerkstoff das Zink anstelle der Legierungselemente, wie beispielsweise Magnesium oder Aluminium, freigelegt wird. Interne Untersuchungen haben gezeigt, dass feuerverzinkte Blechwerkstoffe, welche mit einer stochastischen Oberflächenstruktur dressiert wurden, in den Dressierabdrücken (Talbereiche) des beschichteten Blechwerkstoffes eine andere Oberflächenchemie aufweisen als auf den Erhebungen (Bergbereiche) des beschichteten Blechwerkstoffes. Während die chemische Zusammensetzung in den Talbereichen zinkreicher ist, weisen die Bergbereiche hohe Anteile der sauerstoffaffinen Legierungselemente (Al, Mg, etc.) auf.

In den internen Untersuchungen wurde des Weiteren festgestellt, dass der Kontakt von Dressierwalzen- und Blechoberfläche und die damit einhergehende Änderung der Oberflächenchemie innerhalb eines Dressierabdruckes bei einer stochastischen Oberflächentextur jedoch ungleichmäßig und unkontrolliert verläuft. Diese Ungleichmäßigkeit hat zur Folge, dass sich Prozessmedien wie Umformöle inhomogen in den Talbereichen verteilen. Um zu gewährleisten, dass derartige Schmiermittel an die umformprozessrelevanten Stellen - der Kontaktfläche von formgebendem (Umform-)Werkzeug und Blechwerkstoff - gelangen, muss nach dem Dressieren standardmäßig mehr Schmiermittel aufgebracht werden, als für den Umformprozess eigentlich notwendig wäre.

Auch eine Reinigung von standardmäßig mit Schmiermittel beschichteten und mit einer stochastischen Oberflächentextur dressierten Blechwerkstoffen stellt die verarbeitenden Betriebe vor große Herausforderungen hinsichtlich Prozess, Umwelt- sowie Arbeitsschutz. Zudem kann bei komplexen Bauteilgeometrien häufig auf der Anwenderseite eine Zusatzbeölung nötig sein, die mit erheblichem Mehraufwand und Kosten verbunden ist. Des Weiteren müssen diese zusätzlichen Prozessmedien im Zuge der Weiterverarbeitung in Form von Phosphatier- und Lackierprozessen wieder abgereinigt werden, was mit einer erheblichen Belastung für die Umwelt und die in den Betrieben beschäftigten Personen verbunden ist.

Mithilfe eines Lasertexturierverfahrens kann eine Dressierwalze mit einer deterministischen Textur hergestellt werden, vgl. EP 2 892 663 B1, deren Oberfläche einen definierten Traganteil besitzt. Der Traganteil der Dressierwalze gibt den Flächenanteil der formgebenden Elemente im Verhältnis zur Fläche der existierenden Vertiefungen an der Oberfläche der texturierten Dressierwalze an. Ein höherer Traganteil der Dressierwalze bedeutet, dass während des Dressierens die Kontaktfläche zwischen Blechwerkstoff und Dressierwalze zunimmt und so mehrere und/oder größere Dressierabdrücke (Talbereiche) auf der Oberfläche eines beschichteten Blechwerkstoffs entstehen. Interne Untersuchungen haben gezeigt, dass durch einen höheren Traganteil die Oberflächenchemie bei feuerverzinkten Überzügen an mehreren Stellen durch den Kontakt des Blechwerkstoffes mit den formgebenden Elementen der Dressierwalze modifiziert werden können. Diese Modifikation des Traganteils kann positive Auswirkungen auf die Umformeigenschaften des Blechwerkstoffes mit sich bringen.

Die Aufgabe ist daher, ein mit einem zinkbasierten Überzug beschichtetes und mit einer deterministischen Oberflächenstruktur dressiertes Stahlblech zur Verfügung zu stellen, welches eine verbesserte Benetzungseigenschaft aufweist, durch welche der Einsatz von Prozessmedien verringert werden kann.

Die Aufgabe wird mit den Merkmalen des Anspruches 1 gelöst.

Die Bereitstellung einer deterministischen Oberflächenstruktur auf einem dressierten und mit einem zinkbasierten Überzug beschichteten Stahlblech ist wesentlich für weitere Prozesse, insbesondere in der weiterverarbeitenden Industrie zur Herstellung von Bauteilen für Automobile. Im Zuge der Bauteilherstellung, insbesondere in Umformprozessen, ist es vorteilhaft, wenn verwendete Prozessmedien, wie zum Beispiel Öl und/oder Schmierstoffe, homogen und in notwendiger Auflage an umformprozessrelevanten Stellen vorhanden sind. Diese umformprozessrelevanten Stellen sind in der Regel die Kontaktflächen von Stahlblech und formgebenden Werkzeugen - demnach nicht die Einprägungen (Talbereiche) in den Stahlblechen, in denen sich die Prozessmedien bevorzugt sammeln, sondern die Oberfläche in Form der Fläche der Erhebungen (Bergbereiche) auf den Stahlblechen.

Die Erfinder haben festgestellt, dass bei einem mit einem zinkbasierten Überzug beschichteten und mit einer deterministischen Oberflächenstruktur dressierten Stahlblech im Vergleich zum Stand der Technik eine verbesserte Benetzungseigenschaft bereitgestellt werden kann, wodurch der Einsatz von Prozessmedien verringert werden kann, indem eine gezielte Veränderung respektive eine verbesserte Ausgestaltung der Oberflächenchemie an der Oberfläche in den Talbereichen der mit einem zinkbasierten Überzug beschichteten und mit einer deterministischen Oberflächenstruktur dressierten Stahlbleche eingestellt wird. Prozessmedien können auf einer gut benetzbaren Oberfläche innerhalb der Talbereiche besser spreiten, bis sie aufgrund der wirkenden Kapillarkräfte in den Flankenbereichen und optional an den Übergängen zwischen den Talbereichen und Flankenbereichen der Oberflächenstruktur gehalten werden.

Das Stahlblech ist mit einem zinkbasierten Überzug beschichtet, welcher durch Schmelztauchbeschichten aufgebracht ist, wobei der Überzug neben Zink und unvermeidbaren Verunreinigungen zusätzliche Elemente wie Aluminium mit einem Gehalt von 0,1 bis zu 5 Gew.-% und Magnesium mit einem Gehalt von 0,1 bis zu 5 Gew.-% in dem Überzug enthält.

Stahlbleche mit zinkbasiertem Überzug weisen einen sehr guten kathodischen Korrosionsschutz auf, welche seit Jahren im Automobilbau eingesetzt werden. Ist ein verbesserter Korrosionsschutz vorgesehen, weist der Überzug Magnesium mit einem Gehalt von mindestens 0,3 Gew.-%, insbesondere von mindestens 0,6 Gew.-%, vorzugsweise von mindestens 0,9 Gew.-% auf. Aluminium kann mit einem Gehalt von mindestens 0,3 Gew.-% vorhanden sein, um insbesondere eine Anbindung des Überzugs an das Stahlblech zu verbessern und insbesondere eine Diffusion von Eisen aus dem Stahlblech in den Überzug bei einer Wärmebehandlung des beschichteten Stahlblechs im Wesentlichen zu verhindern, damit die positiven Korrosionseigenschaften weiterhin erhalten bleiben. Dabei kann die Dicke des Überzugs zwischen 1 und 15 µm, insbesondere zwischen 2 und 12 µm, vorzugsweise zwischen 3 und 10 µm betragen. Unterhalb der Mindestgrenze kann kein ausreichender kathodischer Korrosionsschutz gewährleistet werden und oberhalb der Höchstgrenze können Fügeprobleme beim Verbinden des erfindungsgemäßen Stahlblechs respektive eines daraus gefertigten Bauteils mit einem anderen Bauteil auftreten. Insbesondere kann bei Überschreiten der angegebenen Höchstgrenze der Dicke des Überzugs kein stabiler Prozess beim thermischen Fügen bzw. Schweißen sichergestellt werden. Beim Schmelztauschbeschichten werden zunächst die Stahlbleche mit einem entsprechenden Überzug beschichtet und anschließend dem Dressieren zugeführt.

Durch das Vorhandensein der sauerstoffaffinen Legierungselemente AI und Mg von jeweils mindestens 0,1 Gew.-% im zinkbasierten Überzug bilden sich auf der Oberfläche des Überzugs bzw. oberflächennah Aluminium- und Magnesiumoxide aus. Insbesondere bildet sich eine magnesiumreiche Oxidschicht an der Oberfläche des Überzugs aus. Die magnesiumreiche Oxidschicht besitzt hydrophobe Benetzungseigenschaften, sodass wässrige Medien die Oberfläche des beschichteten Stahlblechs nicht homogen benetzen und sich zusammenziehen. Öle bzw. Schmierstoffe hingegen spreiten auf derartigen hydrophoben Oberflächen und werden angezogen. Unmittelbar unter der magnesiumreichen Oxidschicht liegen die Elemente Aluminium und Zink. Oxidschichten können im Wesentlichen das Benetzungsverhalten negativ beeinflussen, wobei Magnesiumoxide ein schlechteres Benetzungsverhalten im Vergleich zu Aluminiumoxiden aufweisen. Untersuchungen hinsichtlich der Benetzbarkeit wurden intern mit einem Prozessmedium der Fa. Fuchs mit der Bezeichnung "ANTICORIT PL 3802 39 S" durchgeführt, und es wurde ermittelt, dass dieses Prozessmedium besser auf Aluminiumoxiden als auf Magnesiumoxiden benetzt. Dabei ist die Benetzbarkeit von den Verhältnissen der beteiligten Oberflächenspannungen abhängig, die über die Youngsche Gleichung mit dem Kontaktwinkel in Beziehung stehen und diesen damit zum Maß für die Benetzbarkeit machen. Je kleiner dabei der Kontaktwinkel ist, desto größer ist die Benetzbarkeit. Die Kontaktwinkel wurden bei diesem Prozessmedium mit ca. 14° für Al₂O₃ und mit ca. 19° für MgO bestimmt.

Die deterministische Oberflächenstruktur ist daher derart auszulegen und derart in ein mit einem zinkbasierten Überzug beschichtetes Stahlblech einzuprägen, dass die eingeprägten Talbereiche eine im Wesentlichen homogene und im Gegensatz zu den Bergbereichen des beschichteten Stahlblechs andere Oberflächenchemie aufweisen. Der Anteil bzw. das Verhältnis von Bergbereichen, in denen die sauerstoffaffinen Legierungselemente vorzufinden sind, zu Talbereichen, in denen die darunter befindlichen Elemente, insbesondere Zink und optional Aluminium mehr zum Vorschein kommen, kann gezielt eingestellt werden. Mit einer unterschiedlichen Oberflächenchemie, insbesondere in den Talbereichen, geht eine unterschiedliche Oberflächenenergie und damit Benetzbarkeit einher.

Im Rahmen eines Dressierens stellt der Kontakt von formgebenden Elementen der mit einer deterministischen Struktur eingestellten Oberfläche einer Dressierwalze mit der Oberfläche eines mit einem zinkbasierten Überzug beschichteten Stahlblechs eine mechanische Beanspruchung bereit, durch welche die unmittelbar unterhalb der magnesiumreichen Oxidschicht liegenden Elemente Zink und optional Aluminium(-oxid) an die Oberfläche des Überzugs gelangen können.

Das mit einem zinkbasierten Überzug beschichtete und mit einer deterministischen Oberflächenstruktur dressiere Stahlblech weist somit eine Oberfläche auf, welche Bergbereiche und Talbereiche aufweist, welche über Flankenbereiche miteinander verbunden sind, wobei eine relative Konzentration an Magnesium an der Oberfläche des Überzugs in den Talbereichen vorliegt, welche geringer ist als an der Oberfläche des Überzugs in den Bergbereichen.

Insbesondere können die Bergbereiche im Wesentlichen durchgehend miteinander verbunden sein, die Bergebereiche bilden somit quasi einen durchgehenden Bergbereich, von dem ausgehend die Talbereiche und Flankenbereiche wiederkehrend an der Oberfläche des beschichteten Stahlblechs als deterministische Struktur eingeprägt sind.

Durch die gezielte Änderung der Oberflächenchemie können lokale Benetzungsphänomene von Prozessmedien gezielt gesteuert werden. Prozessmedien werden von den wasserabweisenden und magnesiumreichen Oxidschichten in den Bergbereichen angezogen, wobei sich die hydrophoben Prozessmedien bei deterministischen Oberflächenstrukturen bevorzugt an den Flankenbereichen ansammeln. Die Änderung der Oberflächenzusammensetzung in den Talbereichen, insbesondere zu einer magnesiumärmeren Konzentration, sorgt für eine Beförderung und/oder Verteilung des Prozessmediums an die für den Umformprozess vorteilhaften Stellen - den Flankenbereichen der Oberflächenstruktur.

Unter relativer Konzentration an Magnesium ist der Massenanteil an Magnesium im zinkbasierten Überzug bezogen auf einen bestimmten Bereich an der Oberfläche zu verstehen. Die Talbereiche sind eindeutig von den Bergbereichen bzw. dem Bergbereich differenzierbar, da die Flankenbereiche diese voneinander trennen. Magnesium liegt in metallischer und/oder in oxidischer Form und/oder hydroxidischer Form und/oder als Magnesiumcarbonat vor. Ermittelt werden können die relativen Konzentrationsunterschiede bezüglich Magnesium, Aluminium und Zink an der Oberfläche des Überzugs durch Aufnahme der örtlichen Verteilung der Signale für diese Legierungselemente mittels Flugzeit-Sekundärionen-Massenspektrometer (Time-of-Flight Secondary Ion Mass Spectrometry, ToF-SIMS) im abbildenden Modus oder in ähnlicher Weise mittels Augerelektronen- oder Photoelektronenspektroskopie. Die ToF-SIMS stellt ein Analyseverfahren zur Bestimmung der chemischen Oberflächenzusammensetzung der obersten 1-3 Monolagen dar.

Mittels ToF-SIMS bestimmte relative Konzentrationsunterschiede werden gemessen, in dem die zu analysierende Oberfläche innerhalb einer repräsentativen Messfläche rasternd untersucht wird. Dabei wird an jeder Position des Rasters ein Spektrum in der positiven Polarität aufgenommen und die Rohsignale für die Hauptbestandteile (Legierungselemente) aufgenommen. Die relative Konzentration des Elements X, welches in diesem Fall für eines der im feuerverzinkten Überzug befindlichen Legierungselemente steht, ergibt sich aus dem Quotienten [X-Rohsignal-Integral / (Zn-Rohsignal-Integral + Mg-Rohsignal-Integral + Al-Rohsignal-Integral)], wobei im Nenner des Quotienten die Summe der Rohsignal-Integrale aller im Überzug befindlichen Legierungselemente steht. "Rohsignal" des Elementes X bei dieser Definition ist die Intensität bzw. Peak-Fläche des Elementes X im Massenspektrum bzw. "Rohsignal-Integral" des Elementes X ist die integrierte Intensität, welche über eine definierte zusammenhängende Fläche von Rasterpositionen dargestellt und dem jeweiligen Element X zugeordnet wird. Die internen ToF-SIMS-Messungen wurden mittels eines Geräts TOF.SIMS 5, der Firma ION-TOF GmbH durchgeführt.

Die Bestimmung der relativen Konzentration von Zink, Aluminium und Magnesium erfolgt durch Bestimmung der absoluten Konzentration dieser Elemente auf einer definierten zusammenhängenden Fläche und anschließenden Normierung auf 100%; dabei wird die Summe der Konzentration an Zink, Aluminium und Magnesium gleich 100 gesetzt und der Anteil des jeweiligen Elements an diesem 100% als relative Konzentration, also bezogen auf 100%, gewertet bzw. gewichtet. Die relative Konzentration eines Legierungselementes (Al, Mg, Zn) bezieht sich mithin auf die Summe der Konzentrationen der drei Legierungselemente Al, Mg, Zn, indem diese Summe 100% darstellt. Da die absolute Konzentration der drei Legierungselemente Al, Mg und Zn von Beschichtung zu Beschichtung variieren kann, erfolgt erfindungsgemäß die Angabe der lokalen relativen Konzentration der jeweiligen Elemente im Talbereich im Vergleich zum Bergbereich in Prozentpunkten, um die Änderungen zwischen den beiden Bereichen genau zu definieren.

Die relative Konzentration respektive der Massenanteil an Magnesium bezogen auf die Summe aller Anteile an Zink, Aluminium und Magnesium (in metallischer und/oder oxidischer Form und/oder hydroxidischer Form und/oder als Magnesiumcarbonat) an der Oberfläche des Überzugs in den Talbereichen ist mindestens 20% geringer als in den Bergbereichen, insbesondere mindestens 40%, vorzugsweise mindestens 60%, bevorzugt mindestens 90%. Die relative Konzentration kann gegen Null gehen oder aber unterhalb der Nachweisgrenze der ToF-SIMS liegen.

Unter deterministischer Oberflächenstruktur sind wiederkehrende Oberflächenstrukturen zu verstehen, welche eine definierte Form und/oder Ausgestaltung aufweisen, vgl. EP 2 892 663 B1. Insbesondere gehören hierzu zudem Oberflächen mit einer (quasi-)stochastischen Anmutung, die jedoch mittels eines deterministischen Texturierungsverfahrens aufgebracht werden und sich somit aus deterministischen Formelementen zusammensetzen.

Unter Stahlblech ist allgemein ein Stahlflachprodukt zu verstehen, welches in Blechform bzw. in Platinenform oder in Bandform bereitgestellt werden kann.

Die geometrische Ausgestaltung (Größe und Tiefe) einer deterministischen Oberflächenstruktur (negative Form) auf einem mit einem zinkbasierten Überzug beschichteten Überzug und dressierten Stahlblech hängt insbesondere davon ab, wie die entsprechende geometrische Struktur (positive Form) auf einer Dressierwalze gestaltet ist/wird. Vorzugsweise kommen Laser-Texturierverfahren zur Anwendung, um gezielte Strukturen (positive Form) auf der Oberfläche einer Dressierwalze durch Materialabtrag einstellen zu können. Insbesondere kann durch gezielte Ansteuerung der Energie, der Pulsdauer und Wahl einer geeigneten Wellenlänge eines auf die Oberfläche der Dressierwalze einwirkenden Laserstrahls positiv Einfluss auf die Gestaltung der Struktur(en) genommen werden. fs-, ps- und ns-Pulse sind allesamt für einen Materialabtrag geeignet, die Art der Energieeinkoppelung und des Abtrages auf einer Festkörperoberfläche ist jedoch wesentlich unterschiedlich, ebenso die Größe der Wärmeeinflusszone (HAZ). Je kürzer die Pulsdauer desto weniger Energie kann beispielsweise aus dem Laserfokus in die Umgebung (HAZ) abfließen. Je länger der Puls desto mehr der Strahlungsenergie wird in das sich bereits bildende Plasma eingekoppelt oder von diesem reflektiert, kann also nicht in die Dressierwalzenoberfläche direkt eingekoppelt werden. Ein Puls hinterlässt auf der Dressierwalzenoberfläche einen im Wesentlichen kreisrunden Krater, der bzw. die, bei mehreren Kratern, nach dem Dressiervorgang die Oberfläche respektive die Fläche der Erhebungen auf dem Stahlblech und somit die Kontaktfläche zwischen Stahlblech und formgebenden Werkzeug abbildet. Eine Reduktion der Pulsdauer hat Einfluss auf die Ausbildung eines Kraters, insbesondere kann der Durchmesser des Kraters verringert werden. Durch die Reduktion der Pulsenergie, insbesondere bei der Verwendung von Kurz- bzw. Ultrakurzpulslasern, ist es möglich, die geometrische Struktur (positive Form) auf der Oberfläche einer Dressierwalze gezielt einzustellen. Dies wird beispielsweise erreicht, wenn die Pulsdauer des Lasers, mit dem die Oberfläche der Dressierwalze texturiert wird, in Richtung auf die Abtragsschwelle verringert wird und so die geometrische Struktur auf der Dressierwalze mit höherer Auflösung erzeugt werden kann. Ähnliches kann durch Erhöhen der Strahlprofilqualität (M²) und der Apertur der idealerweise asphärischen Fokussieroptik erzielt werden. Insbesondere durch die hohe Auflösung bzw. geringe Kraterfläche, die durch die energieärmere Wechselwirkung von Laser und Dressierwalze entsteht, können am Flankenbereich gezielt rauere Flächen und beliebige Steigungen (Winkel) des Flankenbereichs eingestellt werden.

Weitere vorteilhafte Ausgestaltungen und Weiterbildungen gehen aus der nachfolgenden Beschreibung hervor. Ein oder mehrere Merkmale aus den Ansprüchen, der Beschreibung wie auch der Zeichnung können mit einem oder mehreren anderen Merkmalen daraus zu weiteren Ausgestaltungen der Erfindung verknüpft werden. Es können auch ein oder mehrere Merkmale aus den unabhängigen Ansprüchen durch ein oder mehrere andere Merkmale verknüpft werden.

Die unmittelbar unterhalb der magnesiumreichen Oxidschicht liegenden Elemente Zink(-) und/oder Aluminium(-oxid) gelangen durch die mechanische Einwirkung an die Oberfläche, sodass gemäß einer Ausgestaltung des erfindungsgemäßen Stahlblechs eine relative Konzentration an Zink an der Oberfläche des Überzugs in den Talbereichen vorliegt, welche größer ist als die relative Konzentration an Zink an der Oberfläche des Überzugs in den Bergbereichen. Die lokale relative Konzentration an Zink im Überzug in den Talbereichen ist mindestens 20% größer als die relative Konzentration an Zink an der Oberfläche des Überzugs in den Bergbereichen, insbesondere mindestens 30%, vorzugsweise mindestens 40%, bevorzugt mindestens 50%. Ermittelt werden kann die relative Konzentration des Zinks und/oder des Aluminiums an der Oberfläche des Überzugs ebenflass durch Auswertung von ToF-SIMS-Aufnahmen.

Gemäß einer Ausgestaltung des erfindungsgemäßen Stahlblechs weist die Oberflächenstruktur einen Flankenbereich auf, welcher zur Senkrechten des Stahlblechs mit einem Winkel zwischen 1° und 89° ausgebildet ist. Der Winkel kann insbesondere zwischen 50° und 87°, vorzugsweise zwischen 60° und 85°, besonders bevorzugt zwischen 65° und 82° ausgebildet sein. Der Tal- und Flankenbereich (negative Form) der Oberflächenstruktur entspricht im Wesentlichen der Oberfläche (positive Form) an einer Dressierwalze, welche durch entsprechende Einwirkung auf das Stahlblech die Oberflächenstruktur ausbildet respektive einprägt. Der die Oberflächenstruktur umlaufende und ausbildende Flankenbereich definiert zusammen mit dem einstückig an den Flankenbereich angeschlossenen Talbereich ein geschlossenes Volumen der in das Stahlblech mittels Dressieren eingeprägten Oberflächenstruktur. Das geschlossene Volumen, das sogenannte Leervolumen, kann für die spätere Verarbeitung mittels Umformverfahren auf ein zu applizierendes Prozessmedium, insbesondere Öl, abgestimmt sein.

Gemäß einer Ausgestaltung des erfindungsgemäßen Stahlblechs weist das Stahlblech einen Traganteil kleiner 50% auf, insbesondere kleiner 40%, vorzugsweise kleiner 30%, bevorzugt kleiner 25%, besonders bevorzugt kleiner 20%, wobei durch den reduzierten Traganteil die Menge an prozessbedingten Prozessmedien bei gleichzeitiger Erzielung guter Umformergebnisse reduziert werden kann. Unter Traganteil ist das Verhältnis der Flächen der Bergbereiche bzw. der Fläche des Bergbereichs zu den Flächen der Talbereiche zu verstehen.

Gemäß einer Ausgestaltung des erfindungsgemäßen Stahlblechs weist das Stahlblech einen Faktor F auf, welcher das Verhältnis aus dressierter Fläche (Summe aller Flächen der Flankenbereiche und Talbereiche) und Quadrat des Flächenumfangs (Summe aller Flächenumfänge, insbesondere die Länge der Ränder, der vom Bergbereich ausgehenden Flankenbereiche am Bergbereich), wobei der Faktor größer 1%, insbesondere größer 1,2%, vorzugsweise größer 1,5%, bevorzugt größer 2% ist. Durch eine geeignete Wahl der geometrischen Abmessung des beim Dressieren eingeprägten Bereichs (Kreis, Rechteck etc.) und durch geeignete Wahl des Flächenumfangs des dressierten Bereichs, welcher der Länge des Randes entspricht und abhängig von der geometrischen Abmessung ist, kann zu verbesserten Umformergebnissen führen.

Gemäß einer Ausgestaltung des erfindungsgemäßen Stahlblechs ist das Stahlblech zusätzlich mit einem Prozessmedium, insbesondere mit einem Öl versehen, wobei insbesondere das Prozessmedium mit einer Auflage bis zu 2 g/m² in der Oberflächenstruktur aufgenommen ist. Aufgrund der Dimensionierung der Oberflächenstruktur besteht nur wenig Bedarf an Prozessmedium, sodass die Auflage bis zu 1,6 g/m², insbesondere bis zu 1,3 g/m², vorzugsweise bis zu 1 g/m², bevorzugt bis zu 0,6 g/m², weiter bevorzugt bis zu 0,4 g/m² begrenzt sein kann. Insbesondere durch die unterschiedliche Oberflächenzusammensetzung lagert sich das Prozessmedium nach dem Aufbringen im Wesentlichen in den Flankenbereichen und optional an den Übergangen zwischen den Flankenbereichen und Talbereichen der Oberflächenstruktur ab und steht für weitere Prozesse, vorzugsweise für Tiefziehprozesse näher an bzw. angrenzend an umformprozessrelevanten Stellen bereit, um die Schmierung zu verbessern und die Reibung und somit den Verschleiß der formgebenden Mittel, wie zum Beispiel Formgebungsvorrichtungen, vorzugsweise (Tiefzieh-) Pressen, zu reduzieren. Insbesondere kann eine Anlagerung des Prozessmediums an tribologisch ungünstigen Bereichen, die nicht zur Prozessmediumzufuhr in die eigentliche Kontakt- bzw. Reibzone beitragen, wirksam unterdrückt werden. Somit hat das erfindungsgemäße Stahlblech mit geringem Prozessmediumbedarf sehr gute tribologische Eigenschaften und ist im Vergleich zu dem aus dem Stand der Technik bekannten, insbesondere beölten Stahlblechen umweltschonender, insbesondere durch geringeren Ressourceneinsatz.

Gemäß einem zweiten Aspekt betrifft die Erfindung ein Verfahren zum Herstellen eines mit einem zinkbasierten Überzug beschichteten und mit einer deterministischen Oberflächenstruktur dressierten Stahlblechs umfassend folgende Schritte:
- Bereitstellen eines mit einem zinkbasierten Überzug beschichteten Stahlblechs, wobei der Überzug neben Zink und unvermeidbaren Verunreinigungen zusätzliche Elemente wie Aluminium mit einem Gehalt von 0,1 bis zu 5 Gew.-% und Magnesium mit einem Gehalt von 0,1 bis zu 5 Gew.-% in dem Überzug enthält,
- Dressieren des Stahlblechs mit einer Dressierwalze, wobei die Oberfläche der Dressierwalze, welche auf die Oberfläche des Stahlblechs einwirkt, mit einer deterministischen Oberflächenstruktur derart eingerichtet ist, dass nach dem Dressieren die Oberflächenstruktur des beschichteten und dressierten Stahlblechs Bergbereiche und Talbereiche aufweist, welche über Flankenbereiche miteinander verbunden sind, und durch das Einwirken der Dressierwalze eine relative Konzentration an Magnesium an der Oberfläche des Überzugs in den Talbereichen eingestellt wird, welche geringer ist als an der Oberfläche des Überzugs in den Bergbereichen.

Die Oberfläche (positive Form) der Dressierwalze bildet durch Krafteinwirkung auf die Oberfläche des Stahlblechs eine Oberflächenstruktur aus, welche einen Tal- und Flankenbereich (negative Form) definiert und entspricht im Wesentlichen der Oberfläche (positive Form) der Dressierwalze. Die Dressierwalze zur Ausbildung einer deterministischen Oberflächenstruktur kann mit geeigneten Mitteln bearbeitet werden, beispielsweise mittels Laser, vgl. auch EP 2 892 663 B1. Des Weiteren können auch andere Abtragverfahren zur Einstellung einer Oberfläche an einer Dressierwalze eingesetzt werden, beispielsweise spanende Fertigungsverfahren mit geometrisch bestimmter oder unbestimmter Schneide, chemische bzw. elektrochemische, optische oder plasmainduzierte Verfahren.

Durch die definierte Oberflächenstruktur einer deterministisch ausgebildeten Textur an der Oberfläche einer Dressierwalze können die im zinkbasierten Überzug sauerstoffaffinen Legierungselemente wie Magnesium und Aluminium durch Krafteinwirkung während des Dressierens an der Oberfläche des Überzugs im Wesentlichen verdrängt werden. Da Magnesium sauerstoffaffiner ist als Aluminium, bildet sich an der Oberfläche im Überzug bzw. oberflächennah eine magnesiumreiche Oxidschicht insbesondere im Zuge des Schmelztauchbeschichtens aus. Durch die Krafteinwirkung können insbesondere gezielt störende Schichten, wie zum Beispiel die magnesiumreichen Oxidschichten, im Wesentlichen verdrängt werden, sodass Zink und optional Aluminium in der relativen Konzentration an der Oberfläche in den Talbereichen zunimmt, wodurch eine verbesserte Benetzbarkeit sichergestellt werden kann.

Um Wiederholungen zu vermeiden, wird jeweils auf die Ausführungen zu dem erfindungsgemäßen mit einer deterministischen Oberflächenstruktur dressierten Stahlblech verwiesen.

Um insbesondere die relative Konzentration an Magnesium an der Oberfläche des Überzugs in den Talbereichen zu reduzieren respektive um die magnesiumreiche Oxidschicht zu verdrängen, wird gemäß einer Ausgestaltung des erfindungsgemäßen Verfahrens ein Dressiergrad von mindestens 0,5% verwendet, sodass durch die gezielte Krafteinwirkung positiv Einfluss auf die Reduktion des Magnesiums an der Oberfläche des Überzugs in den Talbereichen genommen werden kann. Eine weitere Reduktion ist möglich, wenn der Dressiergrad insbesondere mindestens 0,8%, vorzugsweise mindestens 1,0%, bevorzugt mindestens 1,2% beträgt. Der Dressiergrad drückt das Verhältnis der Dickenabnahme (Eingangsdicke zur Ausgangsdicke im Dressiergerüst) des dressierten Stahlblechs zur Eingangsdicke aus. Dressiergrade oberhalb von 2,5% bringen keinen Vorteil und erhöhen nur Arbeitskräfte respektive den apparativen Aufwand, sodass der Dressiergrad insbesondere auf maximal 2,2%, vorzugsweise auf maximal 2% begrenzt wird. Zudem nimmt der beim Dressieren aufgrund der Scherkräfte zwischen Blech- und Dressierwalzenoberfläche außerhalb der Fließscheide erzeugte Abrieb bzw. Verschleiß mit dem Dressiergrad zu.

Gemäß einer Ausgestaltung des erfindungsgemäßen Verfahrens wird das Stahlblech nach dem Dressieren zusätzlich mit Prozessmedium, vorzugsweise mit Öl, versehen, wobei das Prozessmedium mit einer Auflage bis zu 2 g/m², weiter bevorzugt mit einer Auflage bis zu 0,4 g/m² aufgebracht wird.

Im Folgenden werden konkrete Ausgestaltungen der Erfindung mit Bezugnahme auf die Zeichnung im Detail näher erläutert. Die Zeichnung und begleitende Beschreibung der resultierenden Merkmale sind nicht beschränkend auf die jeweiligen Ausgestaltungen zu lesen, dienen jedoch der Illustration beispielhafter Ausgestaltung. Weiterhin können die jeweiligen Merkmale untereinander wie auch mit Merkmalen der obigen Beschreibung genutzt werden für mögliche weitere Entwicklungen und Verbesserungen der Erfindung, speziell bei zusätzlichen Ausgestaltungen, welche nicht dargestellt sind. Gleiche Teile sind stets mit den gleichen Bezugszeichen versehen.

Die Zeichnung zeigt in
- Figur 1): eine schematische Teilschnittansicht eines erfindungsgemäßen Ausführungsbeispiels eines mit einem zinkbasierten Überzug beschichteten und mit einer deterministischen Oberflächenstruktur dressierten Stahlblechs,
- Figur 2a) und 2b): eine schematische Teilschnittansicht einer Oberflächenstruktur auf einem beschichteten und dressierten Stahlblech in Figuren 2a) sowie die Oberflächenstruktur gemäß Figur 2a) in Figur 2b) und
- Figur 3): eine ToF-SIMS-Aufnahme eines Abschnitts eines mit einem zinkbasierten Überzug beschichteten und mit einer deterministischen Oberflächenstruktur dressierten Stahlblechs gemäß eines erfindungsgemäßen Ausführungsbeispiels.

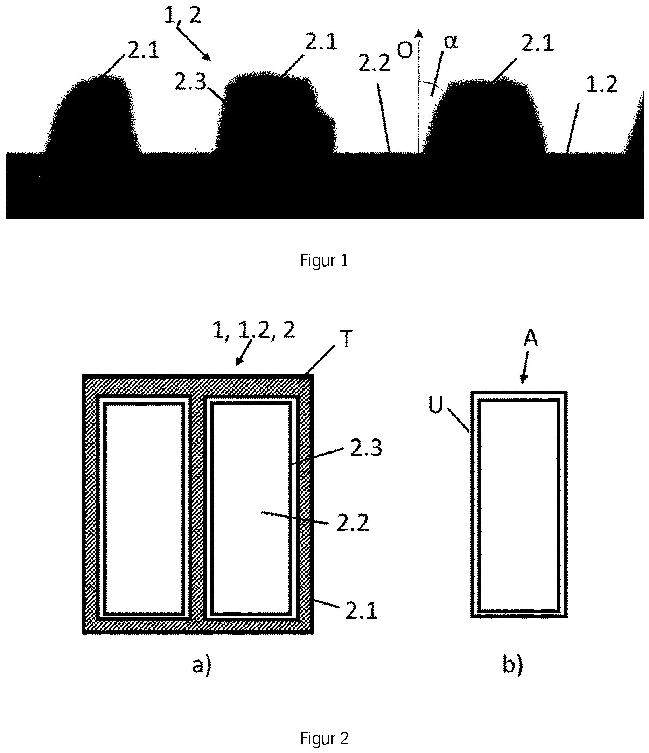

In Figur 1) ist eine schematische Teilschnittansicht eines erfindungsgemäßen Ausführungsbeispiels eines mit einem zinkbasierten Überzug (1.2) beschichteten und mit einer deterministischen Oberflächenstruktur (2) dressierten Stahlblechs (1) dargestellt, wobei die Oberflächenstruktur (2) Bergbereiche (2.1) und Talbereiche (2.2) aufweist, welche über Flankenbereiche (2.3) miteinander verbunden sind. Der Überzug (1.2) enthält neben Zink und unvermeidbaren Verunreinigungen zusätzliche Elemente wie Aluminium mit einem Gehalt von 0,1 bis zu 5 Gew.-% und Magnesium mit einem Gehalt von 0,1 bis zu 5 Gew.-%.

Abhängig von dem Abtragverfahren, mit welchem eine entsprechende Dressierwalze (nicht dargestellt) zum Dressieren des beschichteten Stahlblechs (1) bearbeitet worden ist, wird der Flankenbereich (2.3) und der Talbereich (2.2) durch den entsprechend korrespondierenden Bereich (positive Form) auf der nicht dargestellten Dressierwalze eingestellt. Des Weiteren ist in Figur 1) gut zu erkennen, dass die Oberflächenstruktur (2) einen Flankenbereich (2.3) aufweist, welcher ausgehend von der Oberfläche respektive vom Bergbereich (2.1) bis zu einem Talbereich (2.2) verläuft und welcher zur Senkrechten (O) des Stahlblechs (1) mit einem Winkel (α) zwischen 1° und 89° ausgebildet ist. Der die Oberflächenstruktur (2) umlaufende und ausbildende Flankenbereich (2.3) definiert zusammen mit dem einstückig an den Flankenbereich (2.3) angeschlossenen bzw. angebundenen Talbereich (2.2) ein geschlossenes Volumen der in das Stahlblech (1) mittels Dressieren eingeprägten Oberflächenstruktur (2).

Erfindungsgemäß liegt eine relative Konzentration an Magnesium an der Oberfläche des Überzugs (1.2) in den Talbereichen (2.2) vor, welche geringer ist als an der Oberfläche des Überzugs (1.2) in den Bergbereichen (2.1).

In Figur 2a) ist eine schematische Teilschnittansicht einer deterministischen Oberflächenstruktur, in Form einer Doppel-I-Form auf einem beschichteten und dressierten Stahlblech (1) gezeigt. Die Oberflächenstruktur kann bevorzugt mittels einer Laser-strukturierten Dressierwalze (nicht dargestellt), vgl. EP 2 892 663 B1, dressiert werden. Der Traganteil ist kleiner 30%, wobei der Traganteil das Verhältnis der Flächen der Bergbereiche (2.1) bzw. der Fläche des Bergbereichs (2.1), gestrichelte Fläche des Traganteils (T), zu den Flächen der Talbereiche (2.2) widerspiegelt. Fig. 2b) zeigt nur eine I-Struktur als Beispiel, welche in ein beschichtetes Stahlblech (1) eingeprägt werden kann. Der Faktor F ist größer 1, welcher das Verhältnis aus dressierter Fläche, entspricht beispielsweise der Fläche des dargestellten Rechtecks bzw. Quadrats in Fig. 2a) abzüglich der Fläche des Traganteils (T), und des Quadrats des Flächenumfangs (U), vgl. Fig. 2b) ausdrückt.

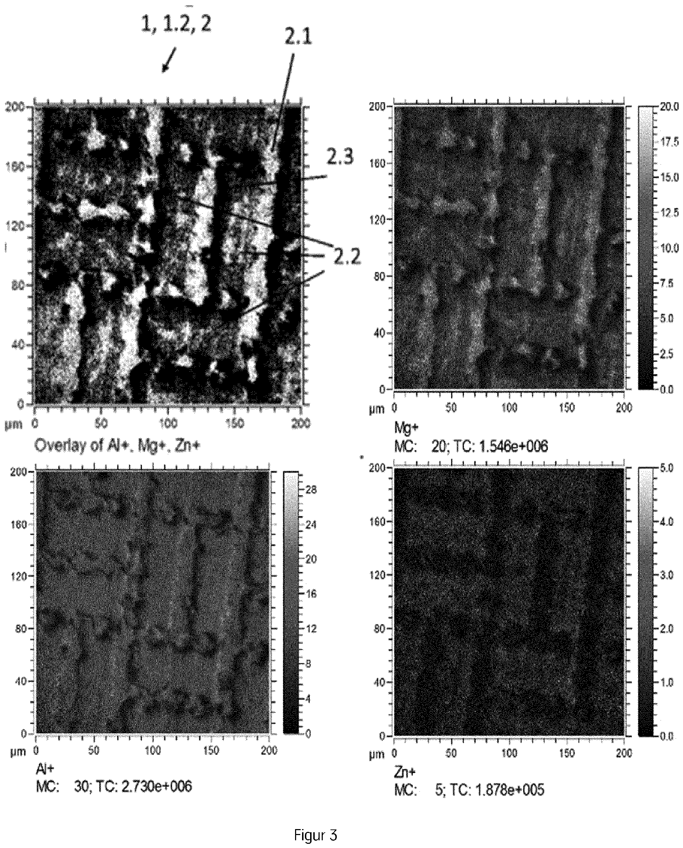

Eine deterministische Oberflächenstruktur ist am Beispiel einer immer wiederkehrenden I-förmigen Einprägung untersucht worden. Andere Ausführungsformen sind ebenfalls denkbar und anwendbar und nicht auf eine I-förmige Einprägung beschränkt. Der zinkbasierte Überzug enthielt neben Zink und unvermeidbaren Verunreinigungen Magnesium mit einem Gehalt von 1,1 Gew.-% und Aluminium mit einem Gehalt von 1,6 Gew.-%. Die Dicke des Überzugs wurde auf 7 µm im Zuge einer Schmelztauchbeschichtung auf einem 1,2 mm dicken Stahlblech/- band eingestellt. Der Dressiergrad betrug 0,8%. Dieses dressierte Stahlblech wurde näher untersucht, insbesondere hinsichtlich der Oberflächenzusammensetzung. In Figur 3) sind ToF-SIMS-Aufnahmen eines Abschnitts dieses dressierten Stahlblechs gezeigt, in einer hohen lateralen Auflösung in einem Bereich von 200x200 µm zur Charakterisierung der chemischen Oberflächenzusammensetzung. Rechts dargestellt sind Aufnahmen von Einzelsignalverteilungen der Legierungselemente Mg, AI und Zn, und links dargestellt eine Übereinanderlegung der einzelnen Signalverteilungen. Gut zu erkennen ist, dass magnesiumreiche Oxidschichten sich an der Oberfläche des Überzugs (1.2) im Zuge des Schmelztauchbeschichtens ausgebildet haben. Dadurch, dass die Bergbereiche (2.1) nicht bzw. nur unwesentlich in Interaktion mit den formgebenden Elementen einer Dressierwalze gelangen und somit keiner wesentlichen Krafteinwirkung ausgesetzt sind, bleiben die magnesiumreichen Oxidschichten an der hell dargestellten Oberfläche des Überzugs (1.2) in den Bergbereichen respektive im Bergbereich (2.1) im Wesentlichen erhalten, s. Fig. 3 linke Darstellung. Anders verhält sich die relative Konzentration des Magnesiums in den Talbereichen (2.2) bzw. in den Flankenbereichen (2.3). Die relative Konzentration an Magnesium (in metallischer und/oder oxidischer Form und/oder hydroxidischer Form und/oder als Magnesiumcarbonat), die an der Oberfläche des Überzugs (1.2) in den Talbereichen (2.2) vorliegt, ist geringer als an der Oberfläche des Überzugs (1.2) in den Bergbereichen (2.1) bzw. in den Flankenbereichen (2.3). Die relative Konzentration an Magnesium an der Oberfläche des Überzugs (1.2) in den Talbereichen (2.2) ist beispielsweise mindestens 20% geringer als an der Oberfläche des Überzugs (1.2) in den Bergbereichen (2.1), insbesondere mindestens 40%, vorzugsweise mindestens 40%, bevorzugt mindestens 90%.

Die unmittelbar unterhalb der magnesiumreichen Oxidschicht liegenden Legierungselemente Zink(-) und/oder Aluminium(-oxid) gelangen durch die mechanische Einwirkung der formgebenden Elemente der Dressierwalze an die Oberfläche, sodass eine relative Konzentration an Zink, an der Oberfläche des Überzugs (1.2) in den Talbereichen (2.2) vorliegt, welche größer ist als die relative Konzentration an Zink an der Oberfläche des Überzugs (1.2) in den Bergbereichen (2.1). Die relative Konzentration an Zink an der Oberfläche des Überzugs (1.2) in den Talbereichen (2.2) ist mindestens 20% größer als die relative Konzentration an Zink an der Oberfläche des Überzugs (1.2) in den Bergbereichen (2.1), insbesondere mindestens 30%, vorzugsweise mindestens 40%, bevorzugt mindestens 50%. Durch das Einwirken der formgebenden Elemente der Dressierwalze kann die relative Konzentration an Magnesium, Zink und/oder Aluminium innerhalb der Talbereiche (2.2) beeinflusst werden, insbesondere in Abhängigkeit von dem Dressiergrad, welcher zwischen 0,5% und 2,5% betragen kann.

Für weitere Untersuchungen wurden sechs beschichtete, dressierte Stahlbleche (V1 bis V6) herangezogen. Die Art der Beschichtung wurde für alle Stahlbleche gleich gewählt, nämlich ein zinkbasierter Überzug (Zink und unvermeidbare Verunreinigungen) mit einem Magnesiumgehalt von 1,6 Gew.-% und einem Aluminiumgehalt von 1,1 Gew.-%, welcher im Schmelztauchbeschichtungsprozess aufgebracht wurde und eine Dicke von ca. 7 µm einnahm. V1 bis V3 wurden mit einer stochastischen Oberflächenstruktur und V4 bis V6 mit einer deterministischen Oberflächenstruktur in Form einer widerkehrenden I-Form dressiert.

**Tabelle 1**

| Stahlblech | Ölauflage [g/m²] | Napfziehversuch | Dressiergrad [%]/ Faktor F [%] | Traganteil T [%] |
|---|---|---|---|---|
| V1 | 2 | ++ | 0,8 / * | * |
| V2 | 1,5 | + | 0,9 / * | * |
| V3 | 1 | 0 | 1,0 / * | * |
| V4 | 1 | +++ | 0,8/ > 2 | < 25 |
| V5 | 0,8 | ++ | 0,9/ > 2 | < 20 |
| V6 | 0,6 | + | 1,0/ > 2 | < 15 |

Die Angaben in Tabelle 1 in Bezug auf einen Streifenziehversuch, ein Napfziehversuch nach DIN EN 1669, welcher bei allen sechs Stahlblechen V1 bis V6 unter gleichen Bedingungen durchgeführt wurde, zeigen im Wesentlichen ein positives Ergebnis. Der Faktor F und der Traganteil bei den V1 bis V3 konnten nicht bestimmt werden, da eine stochastische Oberflächenstruktur keine vernünftig erfassbare Größe aufweist und daher mit * angegeben wurde. Bewertet wurde nach folgenden Kriterien:
+++ bedeutet, dass keine Ausdünnung erkennbar war,
++ bedeutet, dass sowohl der im Streifenziehversuch ermittelte Reibwert als auch die Ausdünnung am Auslauf der Stempelkante am geformten Stahlblech geringer war (geringe Ausdünnung unter 5% der Ausgangsstahlblechdicke),
+ bedeutet, dass die minimale Ausdünnung am umgeformten Stahlblech über 5% aber unter 10% der Ausgangsstahlblechdicke lag,
0 bedeutet, dass eine deutliche erkennbare Ausdünnung ohne Reißer vorlag, welche jedoch nicht mehr im tolerierbaren Bereich lag (15% bis 25% der Ausgangsstahlblechdicke).

Durch das insbesondere gezielte Einstellen der relativen Konzentration an Magnesium, insbesondere durch die Reduktion der magnesiumreichen Oxidschichten an der Oberfläche des Überzugs in den Talbereichen, konnte die Ölauflage an den erfindungsgemäß beschichteten, mit einer deterministischen Oberflächenstruktur dressierten Stahlblech V4 bis V6 auf unterhalb von 1 g/m² reduziert werden, wobei die Menge ausreichend war, um ein entsprechend gutes Ergebnis zu erzielen.

## Patentansprüche

1. Mit einem zinkbasierten Überzug (1.2) beschichtetes und einer deterministischen Oberflächenstruktur (2) dressiertes Stahlblech (1), wobei die Oberflächenstruktur (2) Bergbereiche (2.1) und Talbereiche (2.2) aufweist, welche über Flankenbereiche (2.3) miteinander verbunden sind,
**dadurch gekennzeichnet, dass**
der Überzug neben Zink und unvermeidbaren Verunreinigungen zusätzliche Elemente wie Aluminium mit einem Gehalt von 0,1 bis zu 5 Gew.-% und Magnesium mit einem Gehalt von 0,1 bis zu 5 Gew.-% in dem Überzug (1.2) enthält, wobei eine relative Konzentration an Magnesium an der Oberfläche des Überzugs (1.2) in den Talbereichen (2.2) vorliegt, welche geringer ist als an der Oberfläche des Überzugs (1.2) in den Bergbereichen (2.1).

2. Stahlblech nach Anspruch 1, wobei die relative Konzentration an Magnesium an der Oberfläche des Überzugs (1.2) in den Talbereichen (2.2) mindestens 20% geringer als in den Bergbereichen (2.1) ist, insbesondere mindestens 40%, vorzugsweise mindestens 60%, bevorzugt mindestens 90%.

3. Stahlblech nach einem der vorhergehenden Ansprüche, wobei eine relative Konzentration an Zink an der Oberfläche des Überzugs (1.2) in den Talbereichen (2.2) vorliegt, welche größer ist als die relative Konzentration an Zink an der Oberfläche des Überzugs (1.2) in den Bergbereichen (2.1).

4. Stahlblech nach einem der vorhergehenden Ansprüche, wobei der Flankenbereich (2.3) zur Senkrechten (O) des Stahlblechs (1) mit einem Winkel (α) zwischen 1° und 89° ausgebildet ist.

5. Stahlblech nach einem der vorhergehenden Ansprüche, wobei das Stahlblech (1) einen Traganteil kleiner 50%, insbesondere kleiner 40%, vorzugsweise kleiner 30%, bevorzugt kleiner 25%, besonders bevorzugt kleiner 20% aufweist.

6. Stahlblech nach einem der vorhergehenden Ansprüche, wobei das Stahlblech (1) einen Faktor F größer 1% aufweist.

7. Stahlblech nach einem der vorhergehenden Ansprüche, wobei das Stahlblech (1) zusätzlich mit einem Prozessmedium (M) versehen ist, wobei insbesondere das Prozessmedium (M) mit einer Auflage bis zu 2 g/m² in der Oberflächenstruktur (2) aufgenommen ist.

8. Verfahren zum Herstellen eines mit einem zinkbasierten Überzug (1.2) beschichteten und mit einer deterministischen Oberflächenstruktur (2) dressierten Stahlblechs (1) umfassend folgende Schritte:
- Bereitstellen eines mit einem zinkbasierten Überzug beschichteten Stahlblechs, wobei der Überzug neben Zink und unvermeidbaren Verunreinigungen zusätzliche Elemente wie Aluminium mit einem Gehalt von 0,1 bis zu 5 Gew.-% und Magnesium mit einem Gehalt von 0,1 bis zu 5 Gew.-% in dem Überzug enthält,
- Dressieren des beschichteten Stahlblechs mit einer Dressierwalze, wobei die Oberfläche der Dressierwalze, welche auf die Oberfläche des Stahlblechs einwirkt, mit einer deterministischen Oberflächenstruktur derart eingerichtet ist, dass nach dem Dressieren die Oberflächenstruktur (2) des beschichteten und dressierten Stahlblechs (1) Bergbereiche (2.1) und Talbereiche (2.2) aufweist, welche über Flankenbereiche (2.3) miteinander verbunden sind, und durch das Einwirken der Dressierwalze eine relative Konzentration an Magnesium an der Oberfläche des Überzugs (1.2) in den Talbereichen (2.2) eingestellt wird, welche geringer ist als an der Oberfläche des Überzugs (1.2) in den Bergbereichen (2.1).

9. Verfahren nach Anspruch 8, wobei ein Dressiergrad von mindestens 0,5% beträgt.

10. Verfahren nach einem der Ansprüche 8 oder 9, wobei das Stahlblech (1) zusätzlich mit einem Prozessmedium (M) versehen wird, wobei das Prozessmedium (M) mit einer Auflage bis zu 2 g/m² aufgebracht wird.

## Claims

1. Sheet steel (1) coated with a zinc-based coating (1.2) and skin-pass rolled with a deterministic surface structure (2), the surface structure (2) having peak regions (2.1) and valley regions (2.2) which are connected to one another via flank regions (2.3), **characterized in that** the coating, as well as zinc and unavoidable impurities, comprises additional elements such as aluminum with an amount of 0.1 up to 5 wt% and magnesium with an amount of 0.1 up to 5 wt% in the coating (1.2), a relative concentration of magnesium on the surface of the coating (1.2) in the valley regions (2.2) being lower than on the surface of the coating (1.2) in the peak regions (2.1).

2. Sheet steel according to Claim 1, the relative concentration of magnesium on the surface of the coating (1.2) being at least 20% lower in the valley regions (2.2) than in the peak regions (2.1), more particularly at least 40%, preferably at least 60%, more preferably at least 90%.

3. Sheet steel according to either of the preceding claims, the relative concentration of zinc on the surface of the coating (1.2) in the valley regions (2.2) being greater than the relative concentration of zinc on the surface of the coating (1.2) in the peak regions (2.1).

4. Sheet steel according to any of the preceding claims, the flank region (2.3) being configured with an angle (α) of between 1° and 89° to the perpendicular (0) of the sheet steel (1).

5. Sheet steel according to any of the preceding claims, the sheet steel (1) having a material ratio of less than 50%, more particularly less than 40%, preferably less than 30%, more preferably less than 25%, very preferably less than 20%.

6. Sheet steel according to any of the preceding claims, the sheet steel (1) having a factor F greater than 1%.

7. Sheet steel according to any of the preceding claims, the sheet steel (1) being additionally provided with a process medium (M), the process medium (M) in particular being taken up with a surface weight of up to 2 g/m² in the surface structure (2).

8. Method for producing a sheet steel (1) coated with a zinc-based coating (1.2) and skin-pass rolled with a deterministic surface structure (2), comprising the following steps:
- providing a sheet steel coated with a zinc-based coating, the coating, as well as zinc and unavoidable impurities, comprising additional elements such as aluminum with an amount of 0.1 up to 5 wt% and magnesium with an amount of 0.1 up to 5 wt% in the coating,
- skin-pass rolling the coated sheet steel with a skin-pass roll, where the surface of the skin-pass roll which acts on the surface of the sheet steel is furnished with a deterministic surface structure such that after the skin-pass rolling, the surface structure (2) of the coated and rolled sheet steel (1) has peak regions (2.1) and valley regions (2.2) which are connected to one another via flank regions (2.3), and the exposure to the skin-pass roll establishes a relative concentration of magnesium on the surface of the coating (1.2) in the valley regions (2.2) which is lower than on the surface of the coating (1.2) in the peak regions (2.1).

9. Method according to Claim 8, the degree of skin-pass rolling being at least 0.5%.

10. Method according to either of Claims 8 and 9, the sheet steel (1) being additionally provided with a process medium (M), the process medium (M) being applied with a surface weight of up to 2 g/m².

## Revendications

1. Tôle d'acier (1) revêtue d'un enrobage à base de zinc (1.2) et dressée avec une structure de surface déterministe (2), la structure de surface (2) présentant des zones de crête (2.1) et des zones de vallée (2.2) qui sont reliées les unes aux autres par le biais de zones de flanc (2.3), **caractérisée en ce que** l'enrobage contient, outre du zinc et des impuretés inévitables, des éléments supplémentaires comme de l'aluminium en une teneur de 0,1 à 5 % en poids et du magnésium en une teneur de 0,1 à 5 % en poids dans l'enrobage (1.2), une concentration relative de magnésium au niveau de la surface de l'enrobage (1.2) étant présente dans les zones de vallée (2.2) qui est plus petite qu'au niveau de la surface de l'enrobage (1.2) dans les zones de crête (2.1).

2. Tôle d'acier selon la revendication 1, la concentration relative de magnésium au niveau de la surface de l'enrobage (1.2) dans les zones de vallée (2.2) étant au moins 20 % plus petite que dans les zones de crête (2.1), en particulier au moins 40 %, de préférence au moins 60 %, préférablement au moins 90 %.

3. Tôle d'acier selon l'une quelconque des revendications précédentes, une concentration relative de zinc au niveau de la surface de l'enrobage (1.2) dans les zones de vallée (2.2) étant présente qui est plus grande que la concentration relative de zinc au niveau de la surface de l'enrobage (1.2) dans les zones de crête (2.1).

4. Tôle d'acier selon l'une quelconque des revendications précédentes, la zone de flanc (2.3) étant réalisée avec un angle (α) compris entre 1° et 89° par rapport à la verticale (0) de la tôle d'acier (1).

5. Tôle d'acier selon l'une quelconque des revendications précédentes, la tôle d'acier (1) présentant une partie portante inférieure à 50 %, en particulier inférieure à 40 %, de préférence inférieure à 30 %, préférablement inférieure à 25 %, particulièrement préférablement inférieure à 20 %.

6. Tôle d'acier selon l'une quelconque des revendications précédentes, la tôle d'acier (1) présentant un facteur F supérieur à 1 %.

7. Tôle d'acier selon l'une quelconque des revendications précédentes, la tôle d'acier (1) étant de plus pourvue d'un milieu de processus (M), en particulier le milieu de processus (M) étant absorbé dans la structure de surface (2) avec un poids surfacique allant jusqu'à 2 g/m².

8. Procédé de fabrication d'une tôle d'acier (1) revêtue d'un enrobage à base de zinc (1.2) et dressée avec une structure de surface déterministe (2), comprenant les étapes suivantes:
- fourniture d'une tôle d'acier revêtue d'un enrobage à base de zinc, l'enrobage contenant, outre du zinc et des impuretés inévitables, des éléments supplémentaires comme de l'aluminium en une teneur de 0,1 à 5 % en poids et du magnésium en une teneur de 0,1 à 5 % en poids dans l'enrobage,
- dressage de la tôle d'acier revêtue avec un cylindre de dressage, la surface du cylindre de dressage qui agit sur la surface de la tôle d'acier, étant munie d'une structure de surface déterministe de telle manière qu'après le dressage, la structure de surface (2) de la tôle d'acier revêtue et dressée (1) présente des zones de crête (2.1) et des zones de vallée (2.2) qui sont reliées les unes aux autres par le biais de zones de flanc (2.3), et par l'action du cylindre de dressage, une concentration relative de magnésium au niveau de la surface de l'enrobage (1.2) est ajustée dans les zones de vallée (2.2), qui est plus petite qu'au niveau de la surface de l'enrobage (1.2) dans les zones de crête (2.1).

9. Procédé selon la revendication 8, un degré de dressage étant d'au moins 0,5 %.

10. Procédé selon l'une quelconque des revendications 8 ou 9, la tôle d'acier (1) étant pourvue de plus d'un milieu de processus (M), le milieu de processus (M) étant appliqué avec un poids surfacique allant jusqu'à 2 g/m².
